# EUROPÄISCHE PATENTANMELDUNG

(11) **EP 0 819 579 A2**
(43) Veröffentlichungstag der Anmeldung: **21.01.1998**
(21) Anmeldenummer: 97109922.1
(22) Anmeldetag: 18.06.1997
(51) Int. Cl.: B60R 7/06, F16F 1/36

(54) **Dämpfungselement**

(30) Priorität: 09.07.1996 DE 29611778 U
(71) Anmelder: Möller Plast GmbH, 33649 Bielefeld (DE)
(72) Erfinder: Beckmann, Friedhelm, Dipl.-Ing., 32120 Hiddenhausen (DE)
(74) Vertreter: Schirmer, Siegfried, Dipl.-Ing.

(57) **Zusammenfassung**

Zur Anbringung eines Deckels (1) am Handschuhfach (2) in Kraftfahrzeugen dient ein aus Gummi bestehendes Dämpfungselement (14), das einstückig hergestellt ist und an den beiden Enden je eine als Aufnahme (6,7) dienende kreisförmige Durchbrechung (4) aufweist. Im Bereich der Durchbrechungen (4) sind zur Verlängerung der Gebrauchsdauer Verstärkungen angeordnet. Die äußere kreisförmige Wandung der Aufnahme ist als Anschlagpuffer ausgebildet. Die jeweiligen Aufnahmen (6,7) sind auf zugeordneten entsprechend profilierten Zapfen evtl. unter Spannung aufsteckbar.

## Beschreibung

Die Erfindung betrifft ein Dämpfungselement, insbesondere zur Anbringung am Deckel eines Handschuhfachs in Kraftfahrzeugen, das mit dem einen Ende seitlich auf der Außenseite des Handschuhfachs fest angeordnet ist und das mit dem anderen Ende an einem auf der Innenseite des Deckels beweglich gelagerten, in sich starren Anschlagbügel gehaltert ist, wobei der Anschlagbügel durch eine Durchbrechung in einer dem Handschuhfach zugeordneten flächenartigen Blende geführt ist.

Um die Bewegung des Deckels eines Handschuhfachs, insbesondere die Öffnungsbewegung, kontrollierter durchführen zu können, ist es bereits bekannt, seitlich auf den Außenseiten des Handschuhfachs Dämpfungselemente anzuordnen, welche verhindern, daß der Deckel infolge seines Eigengewichts ruckartig in die Öffnungsstellung fällt.

Diese bekannten Dämpfungselemente bestehen aus einer Mehrzahl von Einzelelementen, die vor dem Einbau zu einer Einheit montiert werden müssen. Diese Vormontagearbeiten sind zeit- und kostenaufwendig und bereiten bei der Entsorgung infolge des vorhandenen unterschiedlichen Materials gewisse Probleme. Abgesehen davon, daß diese bekannten Dämpfungselemente groß bauen, treten im praktischen Gebrauch wiederholt Mängel auf.

Der Erfindung liegt die Aufgabe zugrunde, ein wesentlich kostengünstigeres Dämpfungselement aus einem einheitlichen Material vorzuschlagen.

Diese Aufgabe wird erfindungsgemäß durch ein einstückiges aus einem dehn- und/oder streckbaren Material bestehendes Dämpfungselement gelöst. Das Dämpfungselement kann aus Gummi oder einem verformten Draht in Wendelform gebildet sein. Zweckmäßigerweise sind an den beiden Enden des Dämpfungselements kreisförmige Aufnahmen in Form von Durchbrechungen angeordnet, wobei zur Verlängerung der Lebensdauer im Bereich der Aufnahmen Verstärkungen vorhanden sind. Die gedachten Mittelachsen der Aufnahmen verlaufen senkrecht zueinander. Die am freien Ende des Anschlagbügels angeordnete Aufnahme weist eine äußere kreisförmige Wandung auf, die als Anschlagpuffer dient. Dieser Aufnahme ist ein entsprechend profilierter Zapfen am Ende des Anschlagbügels zugeordnet. Die kreisförmige Aufnahme wird auf einen Zapfen unter Spannung aufgesteckt.

Beim bevorzugten Ausführungsbeispiel ist auf der rückwärtigen Seite der Blende des Handschuhfachs ein Klemmstück einstückig angeformt, durch welche eine Öffnung gebildet ist, die geringfügig kleiner ist als der Außendurchmesser des Anschlagpuffers. Nach Einführen des Anschlagpuffers in das Klemmstück ist die Öffnungslage des Deckels fixiert.

Zweckmäßige Ausgestaltungen der Erfindung sind in den übrigen Unteransprüchen aufgezeigt.

Die Erfindung wird nachfolgend an einem Ausführungsbeispiel näher erläutert. Es zeigen:
- Fig. 1: eine Seitenansicht eines Handschuhfachs mit geschlossenem Deckel;
- Fig. 2: eine Draufsicht auf ein Dämpfungselement und
- Fig. 3: eine Seitansicht eines Dämpfungselements.

Auf der Außenseite des Handschuhfachs 2 ist über eine Aufnahme 7 ein aus Gummi bestehendes Dämpfungselement 14 einseitig an einem Zapfen 12 befestigt, während das andere Ende des Dämpfungselements 14 an einem auf der Innenseite des Deckels 1 beweglich gelagerten in sich starren Anschlagbügel 3 gehaltert ist. Der Anschlagbügel 3 ist durch eine Durchbrechung 4 in einer dem Handschuhfach 2 zugeordneten flächenartigen Blende 5 geführt.

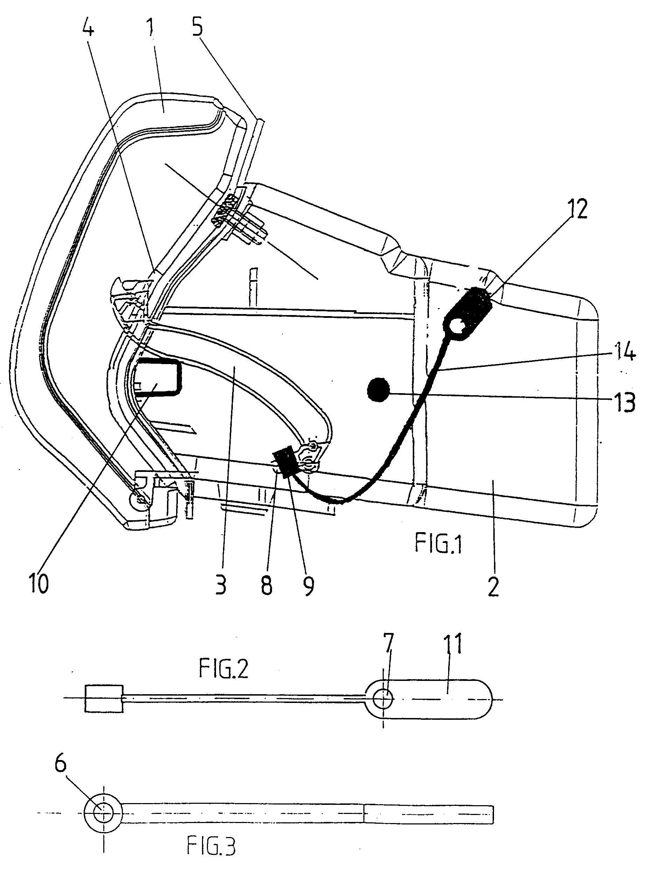

Das erfindungsgemäße Dämpfungselement 14 ist einstückig aus Gummi hergestellt und besitzt an den verstärkten Enden je eine kreisförmige Aufnahme 6; 7. Wie aus den Figuren 2 und 3 ersichtlich, verlaufen die gedachten Mittelachsen der Aufnahmen 6; 7 senkrecht zueinander. Am freien Ende des Anschlagbügels 3 ist ein Zapfen 8 angeordnet, auf den die kreisförmige Aufnahme 6, die als Anschlagpuffer 9 ausgebildet ist, unter Spannung aufsteckbar ist.

Auf der rückwärtigen Seite der Blende 5 ist einstückig ein Klemmstück 10 angeformt. In die Öffnung des Klemmstücks 10 ist der Anschlagpuffer 9 einführbar, wodurch die Endöffnungslage des Deckels 1 fixiert ist. Zur variablen Einstellung der Kraft des Dämpfungselements 14 dient eine Umlenkrolle 13, die zwischen dem Klemmstück 10 und dem Zapfen 12 angeordnet ist.

Durch die Anordnung von Profilierungen auf der Außenseite und/oder Querschnittsveränderungen ist eine definierte Kennlinie für das Dämpfungselement erreichbar.

Aufstellung der Bezugszeichen:
- 1: Deckel
- 2: Handschuhfach
- 3: Anschlagbügel
- 4: Durchbrechung
- 5: Blende an 2
- 6: Aufnahme
- 7: Aufnahme
- 8: Zapfen
- 9: Anschlagpuffer
- 10: Klemmstück
- 11: flächenartige Verstärkung
- 12: Zapfen
- 13: Umlenkung
- 14: Dämpfungselement

## Patentansprüche

1. Dämpfungselement, insbesondere zur Anbringung am Deckel eines Handschuhfachs in Kraftfahrzeugen, das mit dem einen Ende seitlich auf der Außenseite des Handschuhfachs fest angeordnet ist und das mit dem anderen Ende an einem auf der Innenseite des Deckels beweglich gelagerten in sich starren Anschlagbügel gehaltert ist, wobei der Anschlagbügel durch eine Durchbrechung in einer dem Handschuhfach zugeordneten flächenartigen Blende geführt ist, dadurch gekennzeichnet, daß es einstückig aus einem dehn- und/oder streckbaren Element gebildet ist.

2. Dämpfungselement nach Anspruch 1, dadurch gekennzeichnet, daß es aus Gummi gebildet ist.

3. Dämpfungselement nach Anspruch 1, dadurch gekennzeichnet, daß es aus verformten Draht gebildet ist.

4. Dämpfungselement nach Anspruch 3, dadurch gekennzeichnet, daß es durch eine Wendelfeder gebildet ist.

5. Dämpfungselement nach einem der Ansprüche 1 bis 4, dadurch gekennzeichnet, daß an den beiden Enden Aufnahmen (6; 7) angeordnet sind.

6. Dämpfungselement nach Anspruch 5, dadurch gekennzeichnet, daß die Aufnahmen (6; 7) durch Durchbrechungen gebildet sind.

7. Dämpfungselement nach Anspruch 5 oder 6, dadurch gekennzeichnet, daß die Aufnahmen (6; 7) kreisförmig ausgebildet sind.

8. Dämpfungselement nach einem der Ansprüche 5 bis 7, dadurch gekennzeichnet, daß im Bereich der Aufnahmen (6; 7) Verstärkungen angeordnet sind.

9. Dämpfungselement nach einem der Ansprüche 5 bis 8, dadurch gekennzeichnet, daß die gedachten Mittelachsen der Aufnahmen (6; 7) senkrecht zueinander verlaufen.

10. Dämpfungselement nach einem der Ansprüche 1 bis 9, dadurch gekennzeichnet, daß die am freien Ende des Anschlagbügels (3) angeordnete Aufnahme (6) eine äußere kreisförmige Wandung aufweist.

11. Dämpfungselement nach Anspruch 10, dadurch gekennzeichnet, daß die äußere kreisförmige Wandung der Aufnahme (6) als Anschlagpuffer (9) ausgebildet ist.

12. Dämpfungselement nach einem der Ansprüche 1 bis 11, dadurch gekennzeichnet, daß der kreisförmigen Aufnahme (6) ein entsprechend profilierter Zapfen (8) am Ende des Anschlagbügels (3) zugeordnet ist.

13. Dämpfungselement nach Anspruch 12, dadurch gekennzeichnet, daß die kreisförmige Aufnahme (6) auf den Zapfen (8) unter Spannung aufsteckbar ist.

14. Dämpfungselement nach einem der Ansprüche 1 bis 13, dadurch gekennzeichnet, daß an der Blende (5) des Handschuhfachs (2) ein Klemmstück (10) angeordnet ist.

15. Dämpfungselement nach Anspruch 14, dadurch gekennzeichnet, daß das Klemmstück (10) auf der rückwärtigen Seite der Blende (5) angeordnet ist.

16. Dämpfungselement nach Anspruch 14 oder 15, dadurch gekennzeichnet, daß durch das Klemmstück (10) eine Öffnung gebildet ist, die geringfügig kleiner ist als der Außendurchmesser des Anschlagpuffers (9).

17. Dämpfungselement nach einem der Ansprüche 14 bis 16, dadurch gekennzeichnet, daß das Klemmstück (10) einstückig an die Blende (5) des Handschuhfachs (2) angeformt ist.

18. Dämpfungselement nach einem der Ansprüche 1 bis 9, dadurch gekennzeichnet, daß der seitlich auf der Außenseite des Handschuhfachs (2) angeordneten Aufnahme (7) eine flächenartige Verstärkung (11) zugeordnet ist.

19. Dämpfungselement nach einem der Ansprüche 1 bis 18, dadurch gekennzeichnet, daß die Aufnahme (7) auf einen Zapfen (12) aufsteckbar ist.

20. Dämpfungselement nach Anspruch 19, dadurch gekennzeichnet, daß der Zapfen (12) einstückig an das Handschuhfach (2) angeformt ist.

21. Dämpfungselement nach einem der Ansprüche 1 bis 20, dadurch gekennzeichnet, daß auf der Außenseite des Handschuhfachs (2) eine Umlenkung (13) angeordnet ist.

22. Dämpfungselement nach Anspruch 21, dadurch gekennzeichnet, daß die Umlenkung (13) zwischen dem Klemmstück (10) und dem Zapfen (12) für die Aufnahme (7) angeordnet ist.

23. Dämpfungselement nach Anspruch 21 oder 22, dadurch gekennzeichnet, daß die Umlenkung (13) durch eine Rolle gebildet ist.

24. Dämpfungselement nach einem der Ansprüche 21 bis 23, dadurch gekennzeichnet, daß die Umlenkung (13) verstellbar in einem Schlitz geführt ist.

25. Dämpfungselement nach einem der Ansprüche 21 bis 24, dadurch gekennzeichnet, daß die Umlenkung (13) an beliebiger Stelle des Schlitzes festlegbar ist.

26. Dämpfungselement nach einem der Ansprüche 1 bis 25, gekennzeichnet durch Profilierungen auf der Außenseite und/oder Querschnittsveränderungen.
